# EUROPÄISCHE PATENTSCHRIFT

(11) **EP 4 104 282 B1**
(45) Veröffentlichungstag und Bekanntmachung des Hinweises auf die Patenterteilung: **23.04.2025**
(21) Anmeldenummer: 21706502.8
(22) Anmeldetag: 13.02.2021
(51) Int. Cl.: H02M 7/483, H02M 1/32, H02M 3/158

(54) **SCHALTUNGSANORDNUNG ZUR SYMMETRIERUNG EINES GETEILTEN GLEICHSPANNUNGSZWISCHENKREISES**
CIRCUIT ARRANGEMENT FOR BALANCING A SPLIT DC LINK
AGENCEMENT DE CIRCUIT POUR ÉQUILIBRER UNE LIAISON CC DIVISÉE

(30) Priorität: 13.02.2020 DE 102020103839
(43) Veröffentlichungstag der Anmeldung: 21.12.2022
(73) Patentinhaber: SMA Solar Technology AG, 34266 Niestetal (DE)
(72) Erfinder: MUELLER, Burkard, 34123 Kassel (DE)
(86) Internationale Anmeldenummer: PCT/EP2021/053570
(87) Internationale Veröffentlichungsnummer: WO 2021/160872

(56) Entgegenhaltungen:
- US-A1- 2018 275 699
- ABBASI MEHDI ET AL: "An improved voltage balancing technique for a soft-switched high-gain converter with low voltage stress using duty ratio control for wind energy application", 2017 IEEE ENERGY CONVERSION CONGRESS AND EXPOSITION (ECCE), IEEE, 1 October 2017 (2017-10-01), pages 4136 - 4143, XP033247363, DOI: 10.1109/ECCE.2017.8096718
- KENICHIRO SANO ET AL: "Voltage-Balancing Circuit Based on a Resonant Switched-Capacitor Converter for Multilevel Inverters", IEEE TRANSACTIONS ON INDUSTRY APPLICATIONS, IEEE SERVICE CENTER, PISCATAWAY, NJ, US, vol. 44, no. 6, 1 November 2008 (2008-11-01), pages 1768 - 1776, XP011238365, ISSN: 0093-9994, DOI: 10.1109/TIA.2008.2006291

## Beschreibung

Die Erfindung betrifft eine Schaltungsanordnung zur Symmetrierung eines geteilten Gleichspannungszwischenkreises.

Mehrpunkt-Wechselrichter, auch bekannt als Multilevel-Wechselrichter, verfügen in der Regel über einen geteilten Gleichspannungszwischenkreis, der eine Reihenschaltung eines ersten Zwischenkreiskondensators und eines zweiten Zwischenkreiskondensators zwischen einem ersten Gleichspannungsanschluss und einem zweiten Gleichspannungsanschluss umfasst und einen Zwischenkreismittelpunkt zwischen den beiden Zwischenkreiskondensatoren aufweist.

Beim Betrieb eines solchen Mehrpunkt-Wechselrichters zur Bildung eines Inselnetzes muss dieser zum Anschluss beliebiger Lasten geeignet sein. Problematisch sind dabei Verbraucher, die abhängig von der Polarität der Spannung unterschiedliche Leistungen aufnehmen, wie z.B. Föhne, deren Heizwicklung über eine Diode betrieben wird, oder größere Lasten, die per Mittelpunktgleichrichter angeschlossen sind. Bei Anschluss solcher Lasten an einen Mehrpunkt-Wechselrichter mit geteiltem Gleichspannungszwischenkreis würde sich ohne weitere Maßnahmen das elektrische Potential an dem Zwischenkreismittelpunkt in Richtung des Potentials an einem der Gleichspannungsanschlüsse verschieben und dadurch Überspannungen an einer Zwischenkreishälfte und den daran angeschlossenen Halbleiterschaltern verursachen.

Es sind daher Schaltungen zur Symmetrierung von geteilten Gleichspannungszwischenkreisen bekannt, die bei ungleichmäßiger Spannungsaufteilung über die beiden Zwischenkreishälften einen Ladungsausgleich zwischen den Zwischenkreiskondensatoren bewirken, so dass das Potential des Zwischenkreismittelpunktes in Richtung eines Potentials verschoben wird, das in der Mitte zwischen den Potentialen an den beiden Gleichspannungsanschlüssen liegt.

Die Druckschrift K. Sano and H. Fujita, "Voltage-Balancing Circuit Based on a Resonant Switched-Capacitor Converter for Multilevel Inverters" in IEEE Transactions on Industry Applications, vol. 44, no. 6, pp. 1768-1776, Nov.- Dec. 2008, offenbart beispielsweise bei der Abhandlung des Standes der Technik die Verwendung eines bidirektionalen Resonant Switched Capacitor Converters (RSCC) zur Symmetrierung eines geteilten Gleichspannungszwischenkreises. Hierbei ist eine Reihenschaltung eines ersten und eines zweiten Halbleiterschalters, die jeweils antiparallele Dioden aufweisen, parallel zu dem ersten Zwischenkreiskondensator und eine Reihenschaltung aus einem dritten und einem vierten Halbleiterschalter, die jeweils antiparallele Dioden aufweisen, parallel zu dem zweiten Zwischenkreiskondensator angeordnet. Ein erster Zwischenpunkt zwischen dem ersten und zweiten Halbleiterschalter ist über eine Reihenschaltung aus einem Resonanzkondensator und einer Resonanzdrossel mit einem zweiten Zwischenpunkt zwischen dem dritten und vierten Halbleiterschalter verbunden.

Neben der zuvor beschriebenen Symmetrierschaltung wird bei der Abhandlung des Standes der Technik in der Druckschrift WO 2016/011380 A1 eine Schaltung offenbart, die sich von der zuvor beschriebenen Symmetrierschaltung dadurch unterscheidet, dass die Resonanzdrossel nicht zwischen dem Resonanzkondensator und dem zweiten Zwischenpunkt angeordnet ist, sondern zwischen einem Punkt zwischen dem zweiten und dritten Halbleiterschalter und dem Zwischenkreismittelpunkt. Der erste Zwischenpunkt ist in dem Fall über den Resonanzkondensator mit dem zweiten Zwischenpunkt verbunden.

Eine Symmetrierung eines geteilten Gleichspannungszwischenkreises kann mit dieser Schaltung in gleicher Weise ausgeführt werden wie mit der zuvor beschriebenen Symmetrierschaltung, wobei die Ansteuerung der Halbleiterschalter bei beiden Schaltungen in exakt gleicher Weise erfolgt.

Die Druckschrift M. Abbasi and J. Lam, "An improved voltage balancing technique for a softswitched high-gain converter with low voltage stress using duty ratio control for wind energy application," 2017 IEEE Energy Conversion Congress and Exposition (ECCE), 2017, pp. 4136-4143, offenbart einen modularen Gleichspannungswandler, bei dem eine Reihenschaltung eines ersten und eines zweiten Halbleiterschalters, die jeweils antiparallele Dioden aufweisen, parallel zu dem ersten Zwischenkreiskondensator und eine Reihenschaltung aus einem dritten und einem vierten Halbleiterschalter, die jeweils antiparallele Dioden aufweisen, parallel zu dem zweiten Zwischenkreiskondensator angeordnet ist und bei der ein erster Zwischenpunkt zwischen dem ersten und zweiten Halbleiterschalter über eine Reihenschaltung aus einem Resonanzkondensator und einer Resonanzdrossel mit einem zweiten Zwischenpunkt zwischen dem dritten und vierten Halbleiterschalter verbunden ist. Eine Zusatzschaltung zur Symmetrierung der Zwischenkreisspannungen umfasst einen Hilfstransformator, dessen Primärwicklung parallel mit dem Primärwicklung des Haupttransformators eines Gleichspannungswandlermoduls verbunden ist, und zwei parallel mit den Zwischenkreiskondensatoren verschalteten Dioden.

Abgesehen von einer durch unsymmetrische Lasten verursachten Unsymmetrie der Spannungen über dem geteilten Gleichspannungszwischenkreises tritt bei symmetrischen Lasten eine zeitliche Schwankung der Momentanlast der Zwischenkreishälften auf. Bei einem dreiphasigen Dreipunktwechselrichter schwankt beispielsweise die Momentanleistung der Zwischenkreishälften um näherungsweise ein Drittel der mittleren Leistung. Da diese Leistungsschwankung für beide Zwischenkreishälften gegenphasig auftritt, werden die Zwischenkreishälften ungleichmäßig entladen und das Potential an dem Zwischenkreismittelpunkt schwankt mit dreifacher Netzfrequenz. Die daraus resultierende Unsymmetrie der Spannungen über dem geteilten Gleichspannungszwischenkreises gleicht sich aber im zeitlichen Mittel aus, so dass eine Symmetrierung in diesem Fall überflüssig ist und nur unnötige Verluste verursachen würde.

Um einen solchen unnötigen Betrieb zu vermeiden, ist es denkbar, eine Symmetrierschaltung erst bei einer stärkeren Unsymmetrie zu aktivieren, d.h. erst wenn die Spannungsdifferenz zwischen den Zwischenkreishälften oberhalb eines vorgegebenen Schwellwerts liegt. Bei Wechselrichtern, die auf den Betrieb mit einer hohen Spannung am Gleichspannungszwischenkreises dimensioniert sind, können die Potentialschwankungen am Zwischenkreismittelpunkt allerdings hohe Werte annehmen, beispielsweise mehr als ± 10 V, so dass bei Aktivierung einer Symmetrierschaltung der zuvor beschriebenen Art erst oberhalb eines entsprechend hohen Schwellwerts der Resonanzstrom sich aufgrund der hohen Differenzspannung sehr schnell aufschwingen würde, wodurch die Gefahr einer Zerstörung der Halbleiterschalter besteht. Weiterhin kann die Spannung am Resonanzkondensator Cres sich auf so hohe Werte aufschwingen, dass bei einem Schaltungsaufbau gemäß der WO 2016/011380 A1, bei dem diese Spannung zeitweise an einem Schalter T2 oder T3 anliegt, dieser Schalter zerstört wird.

Es ist daher eine Aufgabe der vorliegenden Erfindung, eine Schaltungsanordnung zur Symmetrierung eines geteilten Gleichspannungszwischenkreises bereitzustellen, die dazu geeignet ist, Unsymmetrien der Spannungen an den Zwischenkreishälften des geteilten Gleichspannungszwischenkreises auszugleichen, ohne dass dabei gefährlich hohe Ströme oder Spannungen auftreten, die zu einer Zerstörung von Halbleiterschaltern führen.

Diese Aufgabe wird erfindungsgemäß gelöst durch eine Schaltungsanordnung gemäß dem unabhängigen Anspruch 1. Vorteilhafte Ausgestaltungen der Erfindung sind in den abhängigen Ansprüchen beschrieben.

Bei einer erfindungsgemäßen Schaltungsanordnung zur Symmetrierung eines geteilten Gleichspannungszwischenkreises, der eine Reihenschaltung eines ersten Zwischenkreiskondensators und eines zweiten Zwischenkreiskondensators zwischen einem ersten Gleichspannungsanschluss und einem zweiten Gleichspannungsanschluss umfasst und einen Zwischenkreismittelpunkt zwischen dem ersten Zwischenkreiskondensator und dem zweiten Zwischenkreiskondensator aufweist, ist der erste Gleichspannungsanschluss über einen ersten Halbleiterschalter mit einem ersten Zwischenpunkt, der erste Zwischenpunkt über einen zweiten Halbleiterschalter mit einem Brückenmittelpunkt, der Brückenmittelpunkt über einen dritten Halbleiterschalter mit einem zweiten Zwischenpunkt und der zweite Zwischenpunkt über einen vierten Halbleiterschalter mit dem zweiten Gleichspannungsanschluss verbunden. Die Halbleiterschalter weisen jeweils eine antiparallele Diode auf. Weiterhin ist ein erster Anschluss eines Resonanzkondensators mit dem ersten Zwischenpunkt verbunden und ein zweiter Anschluss des Resonanzkondensators mit dem Zwischenkreismittelpunkt über einen Verbindungspfad verbunden, in dem eine Resonanzdrossel mit dem dritten Halbleiterschalter in einer Reihenschaltung angeordnet ist und der über den zweiten Zwischenpunkt verläuft. Resonanzkondensator und Resonanzdrossel bilden damit einen Resonanzkreis oder werden zumindest durch Schließen des zweiten oder dritten Halbleiterschalters dazu verschaltet.

Bei der erfindungsgemäßen Schaltungsanordnung ist eine Zusatzwicklung mit der Resonanzdrossel magnetisch gekoppelt, wobei ein erster Anschluss der Zusatzwicklung über eine erste Diode mit einem ersten Anschluss einer Gegenspannungsquelle verbunden ist. Ein zweiter Anschluss der Zusatzwicklung ist derart mit einem zweiten Anschluss der Gegenspannungsquelle verbunden, dass eine von der Resonanzdrossel in die Zusatzwicklung eingekoppelte Energie über die erste Diode in die Gegenspannungsquelle entladen wird. Die Polarität der ersten Diode in Bezug auf den ersten Anschluss der Zusatzwicklung und den ersten Anschluss der Gegenspannungsquelle ergibt sich dabei inhärent aus dem Merkmal, dass die in die Zusatzwicklung eingekoppelte Energie über die erste Diode in die Gegenspannungsquelle entladen wird. Eine Entladung erfolgt dabei nur so lange, wie die Spannung über der Zusatzwicklung größer als eine aufgrund der Gegenspannungsquelle vorliegende Gegenspannung zuzüglich der Durchlassspannung der ersten Diode ist, d.h. es wird nicht die vollständige Energie des aus dem Resonanzkondensator und der Resonanzdrossel gebildeten Resonanzkreises in die Zusatzwicklung eingekoppelt und damit in die Gegenspannungsquelle eingespeist, sondern nur ein Teil davon.

In einer Ausführungsform der erfindungsgemäßen Schaltungsanordnung ist der zweite Anschluss der Zusatzwicklung direkt mit dem zweiten Anschluss der Gegenspannungsquelle verbunden, wobei dann in einer noch weiteren Ausführungsform der erste Anschluss der Zusatzwicklung über eine zweite Diode mit einem dritten Anschluss der Gegenspannungsquelle verbunden ist. Bei dieser Anordnung wird die von der Resonanzdrossel in die Zusatzwicklung eingekoppelte Energie je nach Polarität der Spannung über der Zusatzwicklung über die erste Diode in den Teil der Gegenspannungsquelle zwischen dem ersten Anschluss und dem zweiten Anschluss oder über die zweite Diode in den Teil der Gegenspannungsquelle zwischen dem zweiten Anschluss und dem dritten Anschluss entladen. Die Polarität der zweiten Diode in Bezug auf den ersten Anschluss der Zusatzwicklung und den dritten Anschluss der Gegenspannungsquelle ist dazu so zu wählen, dass die in die Zusatzwicklung eingekoppelte Energie über die zweite Diode in die Gegenspannungsquelle entladen wird.

In einer anderen Ausführungsform der erfindungsgemäßen Schaltungsanordnung ist der zweite Anschluss der Zusatzwicklung nicht direkt, sondern über eine vierte Diode mit dem zweiten Anschluss der Gegenspannungsquelle verbunden. Weiterhin ist der erste Anschluss der Zusatzwicklung über eine zweite Diode mit dem zweiten Anschluss der Gegenspannungsquelle verbunden und der zweite Anschluss der Zusatzwicklung über eine dritte Diode mit dem ersten Anschluss der Gegenspannungsquelle. Die Polarität der zweiten Diode, der dritten Diode und der vierten Diode in Bezug auf den ersten bzw. zweiten Anschluss der Zusatzwicklung und den ersten bzw. zweiten Anschluss der Gegenspannungsquelle ist dabei so zu wählen, dass die in die Zusatzwicklung eingekoppelte Energie über die Dioden in die Gegenspannungsquelle entladen wird.

Bei dieser Anordnung liegt dann je nach Polarität der Spannung über der Zusatzwicklung an dem zweiten Anschluss der Zusatzwicklung das am ersten Anschluss der Gegenspannungsquelle anliegende elektrische Potential oder das am zweiten Anschluss der Gegenspannungsquelle anliegende elektrische Potential an, jeweils lediglich verschoben um eine Durchlassspannung der dritten bzw. vierten Diode, so dass die von der Resonanzdrossel in die Zusatzwicklung eingekoppelte Energie je nach Polarität der Spannung über der Zusatzwicklung über die erste und vierte Diode oder über die zweite und dritte Diode in die Gegenspannungsquelle entladen wird.

Ein Aufschwingen des Resonanzstroms wird bei der erfindungsgemäßen Schaltungsanordnung dadurch verhindert, dass die den Strom treibende Spannung in dem aus dem Resonanzkondensator und der Resonanzdrossel gebildeten Resonanzkreis dadurch begrenzt wird, dass sie über die magnetische Kopplung auf die Zusatzwicklung transformiert wird, wo sie, je nach Ausführungsform, über die erste oder zweite Diode bzw. über die erste und vierte Diode oder über die zweite und dritte Diode auf eine an der Gegenspannungsquelle anliegende Spannung geklemmt ist.

Bei der Ausführungsform der erfindungsgemäßen Schaltungsanordnung, bei der der zweite Anschluss der Zusatzwicklung über eine dritte Diode mit dem ersten Anschluss der Gegenspannungsquelle und über eine vierte Diode mit dem zweiten Anschluss der Gegenspannungsquelle verbunden ist, kann zwischen dem zweiten Anschluss der Zusatzwicklung und einem auf einem Zwischenpotential zwischen den am ersten und zweiten Anschluss der Gegenspannungsquelle anliegenden elektrischen Potentialen liegenden Anschluss der Gegenspannungsquelle optional eine schaltbare Verbindung vorgesehen sein. Bei geschlossener schaltbarer Verbindung ist dann der zweite Anschluss der Zusatzwicklung mit dem Zwischenpotential verbunden und bei geöffneter schaltbarer Verbindung ist der zweite Anschluss der Zusatzwicklung über die dritte Diode mit dem elektrischen Potential am ersten Anschluss der Gegenspannungsquelle und über die vierte Diode mit dem elektrischen Potential am zweiten Anschluss der Gegenspannungsquelle verbunden. Infolgedessen ist durch die schaltbare Verbindung die Gegenspannung, auf die die Zusatzwicklung geklemmt wird, zwischen der halben und vollen Spannung der Gegenspannungsquelle umschaltbar, wodurch dann die Symmetrierleistung variiert werden kann.

Es sind weitere Ausführungsformen denkbar, bei denen der Spannungswert der Gegenspannungsquelle eingestellt werden kann und/oder die wirksame Gegenspannung zwischen der Spannung der vollständigen Gegenspannungsquelle und der Spannung nur eines Teils der Gegenspannungsquelle umgeschaltet werden kann, so dass die wirksame Gegenspannung, und damit die Symmetrierleistung, einstellbar ist.

Bei einer erfindungsgemäßen Schaltungsanordnung wird die Gegenspannungsquelle durch den ersten Zwischenkreiskondensator und/oder den zweiten Zwischenkreiskondensator gebildet. Dabei entspricht dann der erste Gleichspannungsanschluss dem ersten Anschluss der Gegenspannungsquelle, und je nach Ausführungsform der Zwischenkreismittelpunkt dem zweiten Anschluss der Gegenspannungsquelle und der zweite Gleichspannungsanschluss dem dritten Anschluss der Gegenspannungsquelle oder aber der zweite Gleichspannungsanschluss dem zweiten Anschluss der Gegenspannungsquelle.

Als Vorteil einer Ausbildung der Gegenspannungsquelle durch die Zwischenkreiskondensatoren des zu symmetrierenden Gleichspannungszwischenkreises ergibt sich zunächst, dass keine zusätzliche, separate Gegenspannungsquelle erforderlich ist. Weiterhin wird die dem Gleichspannungszwischenkreis während des Symmetriervorgangs über die Zusatzwicklung entnommene Energie gleichzeitig zumindest teilweise wieder in diesen zurückgespeist. Je nach Ausführungsform der erfindungsgemäßen Schaltungsanordnung wird dabei dann sogar die dem ersten Zwischenkreiskondensator entnommene Energie in den zweiten Zwischenkreiskondensator eingespeist, bzw. umgekehrt, und dadurch der Symmetriervorgang zusätzlich unterstützt.

In einer Ausführungsform der erfindungsgemäßen Schaltungsanordnung ist die Resonanzdrossel zwischen dem zweiten Anschluss des Resonanzkondensators und dem zweiten Zwischenpunkt angeordnet, d.h. der erste Zwischenpunkt ist über eine Reihenschaltung aus dem Resonanzkondensator und der Resonanzdrossel mit dem zweiten Zwischenpunkt verbunden und der Brückenmittelpunkt ist direkt mit dem Zwischenkreismittelpunkt verbunden.

In einer anderen Ausführungsform der erfindungsgemäßen Schaltungsanordnung ist die Resonanzdrossel zwischen dem Zwischenkreismittelpunkt und dem Brückenmittelpunkt angeordnet, so dass der erste Zwischenpunkt in dem Fall direkt über den Resonanzkondensator mit dem zweiten Zwischenpunkt verbunden ist.

Die vier Halbleiterschalter sind in der erfindungsgemäßen Schaltungsanordnung vorzugsweise derart angeordnet, dass sie für einen Stromfluss zwischen dem ersten Gleichspannungsanschluss und dem zweiten Gleichspannungsanschluss jeweils eine gleiche Durchflussrichtung und Sperrrichtung haben. Infolgedessen haben auch die antiparallelen Dioden der vier Halbleiterschalter zwischen dem ersten Gleichspannungsanschluss und dem zweiten Gleichspannungsanschluss jeweils eine gleiche Durchflussrichtung und Sperrrichtung, welche der jeweiligen Durchflussrichtung und Sperrrichtung des zugehörigen Halbleiterschalters entgegengesetzt ist.

Die zu begrenzende Spannung wird bei der erfindungsgemäßen Schaltungsanordnung durch einen Schaltvorgang, d.h. plötzlich an die Resonanzdrossel angelegt. Um hohe Pulsströme in den Wicklungen der Resonanzdrossel und der Zusatzwicklung zu vermeiden, sollte die magnetische Kopplung zwischen den beiden Wicklungen daher nicht zu gut sein. Vorteilhaft kann der Kopplungsfaktor zwischen der Resonanzdrossel und der Zusatzwicklung beispielsweise im Wertebereich von 0,8 bis 0,9 liegen.

In einer Ausführungsform umfasst die erfindungsgemäße Schaltungsanordnung eine Ansteuerschaltung zur Ansteuerung der Halbleiterschalter, wobei die Ansteuerschaltung dazu eingerichtet ist, den ersten Halbleiterschalter und den dritten Halbleiterschalter mit einem ersten PWM-Signal (Pulsweitenmoduliertes Signal) anzusteuern und den zweiten Halbleiterschalter und den vierten Halbleiterschalter mit einem zweiten PWM-Signal anzusteuern, das, abgesehen von während Ein- und Ausschaltvorgängen zu berücksichtigenden Totzeiten, zu dem ersten PWM-Signal komplementär ist. Die Pulsdauer der PWM-Signale wird dabei beispielsweise gleich der halben Periodendauer einer Resonanzschwingung des aus dem Resonanzkondensator und der Resonanzdrossel gebildeten Resonanzkreises gewählt. Eine Totzeit zwischen einem Ausschalten des ersten PWM-Signals und einem Einschalten des zweiten PWM-Signals bzw. umgekehrt ist beispielsweise so klein, wie es die verwendeten Halbleiterschalter zulassen. Damit ergeben sich PWM-Signale, deren Frequenz unterhalb der Resonanzfrequenz des aus der Reihenschaltung des Resonanzkondensators und der Resonanzdrossel gebildeten Schwingkreises liegt und die in der Regel einen Tastgrad nahe 50 % aufweisen.

Bei einer Ansteuerung der Halbleiterschalter durch die Ansteuerschaltung mit einem derartigen ersten und zweiten PWM-Signal erfolgt bei der erfindungsgemäßen Schaltungsanordnung eine Symmetrierung des geteilten Gleichspannungszwischenkreises, bei der sich die Energieflussrichtung automatisch in Abhängigkeit von der vorliegenden Unsymmetrie der Spannungen über den Zwischenkreishälften einstellt.

Bei einer weiteren Ausführungsform der erfindungsgemäßen Schaltungsanordnung ist die Ansteuerschaltung dazu eingerichtet, die PWM-Signale für den ersten Halbleiterschalter und den zweiten Halbleiterschalter über ein erstes Freigabesignal und die PWM-Signale für den dritten Halbleiterschalter und den vierten Halbleiterschalter über ein zweites Freigabesignal freizuschalten. Über das erste und zweite Freigabesignal lässt sich die erfindungsgemäße Schaltungsanordnung wahlweise zum Transfer von Ladungen aus dem ersten Zwischenkreiskondensator in den zweiten Zwischenkreiskondensator oder umgekehrt aktivieren.

In einer noch weiteren Ausführungsform umfasst die erfindungsgemäße Schaltungsanordnung eine Ansteuerschaltung zur Ansteuerung der Halbleiterschalter, wobei die Ansteuerschaltung dazu eingerichtet ist, den ersten Halbleiterschalter und den vierten Halbleiterschalter mit einem ersten PWM-Signal anzusteuern und den zweiten Halbleiterschalter und den dritten Halbleiterschalter mit einem zweiten PWM-Signal anzusteuern, das, abgesehen von während Ein- und Ausschaltvorgängen zu berücksichtigenden Totzeiten, zu dem ersten PWM-Signal komplementär ist, und wobei die Ansteuerschaltung dazu eingerichtet ist, die PWM-Signale für den ersten Halbleiterschalter und den zweiten Halbleiterschalter über ein erstes Freigabesignal und die PWM-Signale für den dritten Halbleiterschalter und den vierten Halbleiterschalter über ein zweites Freigabesignal freizuschalten.

Weiterhin kann eine erfindungsgemäße Schaltungsanordnung auch eine Ansteuerschaltung zur Ansteuerung der Halbleiterschalter umfassen, die dazu eingerichtet ist, den ersten Halbleiterschalter mit einem ersten PWM-Signal und den zweiten Halbleiterschalter mit einem zweiten PWM-Signal anzusteuern, das, abgesehen von während Ein- und Ausschaltvorgängen zu berücksichtigenden Totzeiten, zu dem ersten PWM-Signal komplementär ist, sowie den dritten Halbleiterschalter mit einem dritten PWM-Signal und den vierten Halbleiterschalter mit einem vierten PWM-Signal anzusteuern, das, abgesehen von während Ein- und Ausschaltvorgängen zu berücksichtigenden Totzeiten, zu dem dritten PWM-Signal komplementär ist. Auch bei dieser Ausführungsform ist die Ansteuerschaltung dazu eingerichtet, die PWM-Signale für den ersten Halbleiterschalter und den zweiten Halbleiterschalter über ein erstes Freigabesignal und die PWM-Signale für den dritten Halbleiterschalter und den vierten Halbleiterschalter über ein zweites Freigabesignal freizuschalten.

Eine erfindungsgemäße Schaltungsanordnung kann somit eine Ansteuerschaltung zur Ansteuerung der Halbleiterschalter umfassen, die dazu eingerichtet ist, den ersten Halbleiterschalter gemeinsam mit dem dritten Halbleiterschalter und komplementär hierzu den zweiten Halbleiterschalter gemeinsam mit dem vierten Halbleiterschalter, oder jeweils entweder ausschließlich den ersten Halbleiterschalter und komplementär hierzu den zweiten Halbleiterschalter oder ausschließlich den dritten Halbleiterschalter und komplementär hierzu den vierten Halbleiterschalter mit einem PWM-Signal anzusteuern. Insbesondere kann eine erfindungsgemäße Schaltungsanordnung demnach auch eine Ansteuerschaltung zur Ansteuerung der Halbleiterschalter umfassen, die dazu eingerichtet ist, eine gleichzeitige Ansteuerung des ersten Halbleiterschalters und des vierten Halbleiterschalters mit ein und demselben PWM-Signal und/oder eine gleichzeitige Ansteuerung des zweiten Halbleiterschalters und des dritten Halbleiterschalters mit ein und demselben PWM-Signal auszuschließen.

Die Ansteuerschaltung kann beispielsweise dazu eingerichtet sein, das erste Freigabesignal zu setzen, wenn die Differenz zwischen der Spannung am ersten Zwischenkreiskondensator und der Spannung am zweiten Zwischenkreiskondensator einen ersten Schwellwert überschreitet und wieder zurückzusetzen, wenn die Differenz zwischen der Spannung am ersten Zwischenkreiskondensator und der Spannung am zweiten Zwischenkreiskondensator einen zweiten Schwellwert unterschreitet. Gleichzeitig kann die Ansteuerschaltung dazu eingerichtet sein, das zweite Freigabesignal zu setzen, wenn die Differenz zwischen der Spannung am zweiten Zwischenkreiskondensator und der Spannung am ersten Zwischenkreiskondensator den ersten Schwellwert überschreitet und wieder zurückzusetzen, wenn die Differenz zwischen der Spannung am zweiten Zwischenkreiskondensator und der Spannung am ersten Zwischenkreiskondensator den zweiten Schwellwert unterschreitet.

Der erste Schwellwert und der zweite Schwellwert werden dabei vorzugsweise so gewählt, dass eine Symmetrierung erst dann aktiviert wird, wenn die Differenz der Spannungen an den Zwischenkreishälften größer ist als potentiell auch bei symmetrischer Last auftretende periodische Schwankungen der Differenz der Spannungen an den Zwischenkreishälften.

Dabei kann optional der erste Schwellwert auch kleiner gewählt werden und nach Überschreiten dieses kleineren ersten Schwellwerts der Tastgrad der PWM-Signale zunächst auf einen kleineren Wert, beispielsweise 5%, begrenzt werden, um den Resonanzkondensator vorzuladen. Der volle Tastgrad von näherungsweise 50% wird dann erst bei Überschreiten eines dritten Schwellwerts eingestellt, der in der vorgenannten Größenordnung liegt.

Für die Ausführungsform, bei der die Ansteuerschaltung dazu eingerichtet ist, den ersten und dritten Halbleiterschalter mit einem ersten PWM-Signal und den zweiten und vierten Halbleiterschalter mit einem zweiten PWM-Signal anzusteuern, kann auch anstelle von zwei Freigabesignalen ein gemeinsames Freigabesignal verwendet werden, das gesetzt wird, wenn der Betrag der Differenz zwischen der Spannung am ersten Zwischenkreiskondensator und der Spannung am zweiten Zwischenkreiskondensator einen ersten Schwellwert überschreitet und wieder zurückzusetzen, wenn der Betrag der Differenz zwischen der Spannung am ersten Zwischenkreiskondensator und der Spannung am zweiten Zwischenkreiskondensator einen zweiten Schwellwert unterschreitet.

Gemäß einer weiteren Ausführungsform der erfindungsgemäßen Schaltungsanordnung ist die Ansteuerschaltung dazu eingerichtet, eine Freischaltung der PWM-Signale durch die Freigabesignale auf Flanken der PWM-Signale zu synchronisieren. Dadurch kann gewährleistet werden, dass bei entsprechender Wahl der Pulsdauer der PWM-Signale die Halbleiterschalter nach der Freischaltung in jedem Fall für ein halbe Periodendauer einer Resonanzschwingung des aus dem Resonanzkondensator und der Resonanzdrossel gebildeten Resonanzkreises angesteuert werden und nicht für eine kürzere Dauer.

Im Folgenden wird die Erfindung anhand von Figuren näher erläutert. Die Figuren dienen hierbei der Veranschaulichung von Ausführungsformen der Erfindung, beschränken die Erfindung aber nicht auf die gezeigten Merkmale.
Fig. 1 zeigt eine erste Ausführungsform einer nicht unter den Schutzumfang der Ansprüche fallenden Schaltungsanordnung,
Fig. 2 zeigt eine zweite Ausführungsform einer nicht unter den Schutzumfang der Ansprüche fallenden Schaltungsanordnung,
Fig. 3 zeigt eine dritte Ausführungsform einer nicht unter den Schutzumfang der Ansprüche fallenden Schaltungsanordnung,
Fig. 4 zeigt eine vierte Ausführungsform einer erfindungsgemäßen Schaltungsanordnung,
Fig. 5 zeigt eine fünfte Ausführungsform einer erfindungsgemäßen Schaltungsanordnung,
Fig. 6 zeigt eine sechste Ausführungsform einer erfindungsgemäßen Schaltungsanordnung,
Fig. 7 zeigt eine siebte Ausführungsform einer erfindungsgemäßen Schaltungsanordnung,
Fig. 8 zeigt eine Ausführungsform einer erfindungsgemäßen Schaltungsanordnung mit einer Ansteuerschaltung zur Ansteuerung der Halbleiterschalter, und
Fig. 9 zeigt noch eine weitere Ausführungsform einer erfindungsgemäßen Schaltungsanordnung mit einer Ansteuerschaltung zur Ansteuerung der Halbleiterschalter, und
Fig. 10 zeigt ein Flussdiagram zur Erzeugung von Signalen zur Ansteuerung der Halbleiterschalter einer erfindungsgemäßen Schaltungsanordnung durch einen Zustandsautomat.

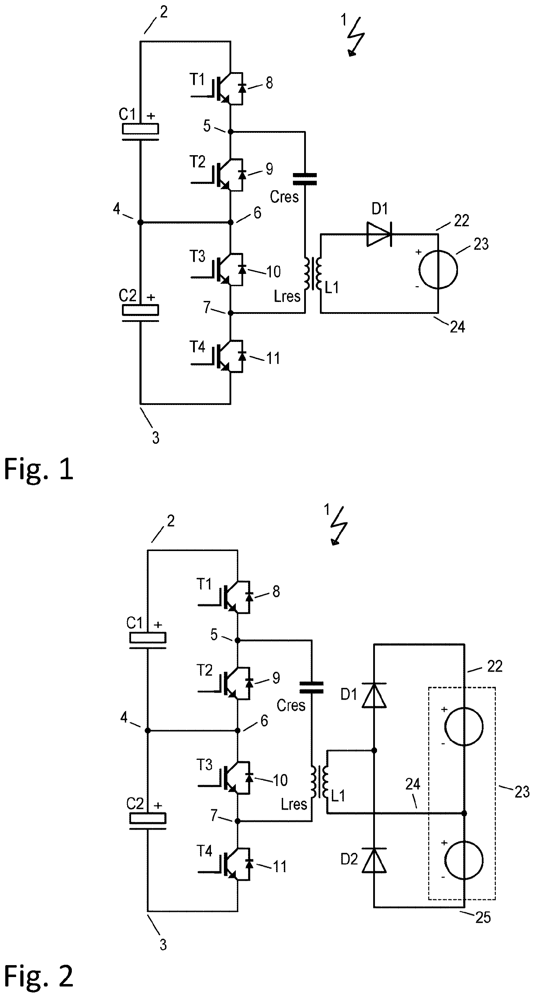

Fig. 1 zeigt eine nicht unter den Schutzumfang der Ansprüche fallenden Schaltungsanordnung 1, bei der zwischen einem ersten Gleichspannungsanschluss 2 und einem zweiten Gleichspannungsanschluss 3 ein geteilter Gleichspannungszwischenkreis, angeordnet ist, der aus der Reihenschaltung eines ersten Zwischenkreiskondensators C1 und eines zweiten Zwischenkreiskondensators C2 mit einem Zwischenkreismittelpunkt 4 gebildet wird.

Parallel zu dem ersten Zwischenkreiskondensator C1 ist eine Reihenschaltung eines ersten Halbleiterschalters T1 und eines zweiten Halbleiterschalters T2 angeschlossen und parallel zu dem zweiten Zwischenkreiskondensator C2 ist eine Reihenschaltung eines dritten Halbleiterschalters T3 und eines vierten Halbleiterschalters T4 angeschlossen. Die vier Halbleiterschalter T1, T2, T3, T4 bilden dabei eine Halbbrücke zwischen dem ersten Gleichspannungsanschluss 2 und dem zweiten Gleichspannungsanschluss 3 mit einem Brückenmittelpunkt 6, der direkt mit dem Zwischenkreismittelpunkt 4 verbunden ist.

Die vier Halbleiterschalter T1, T2, T3, T4 sind bei der Schaltungsanordnung 1 in Fig. 1 so angeordnet, dass sie für einen Stromfluss zwischen dem ersten Gleichspannungsanschluss 2 und dem zweiten Gleichspannungsanschluss 3 jeweils eine gleiche Durchflussrichtung und Sperrrichtung haben und weisen jeweils ein antiparallele Diode 8, 9, 10, 11 auf, deren Durchflussrichtung und Sperrrichtung jeweils derjenigen des zugehörigen Halbleiterschalters T1, T2, T3, T4 entgegengesetzt ist.

Zwischen einem erstem Zwischenpunkt 5 zwischen dem ersten Halbleiterschalter T1 und dem zweiten Halbleiterschalter T2 und einem zweiten Zwischenpunkt 7 zwischen dem dritten Halbleiterschalter T3 und dem vierten Halbleiterschalter T4 ist ein aus der Reihenschaltung eines Resonanzkondensators Cres und einer Resonanzdrossel Lres gebildeter Schwingkreis angeschlossen. Weiterhin ist eine Zusatzwicklung L1 mit der Resonanzdrossel Lres magnetisch gekoppelt, wobei ein erster Anschluss der Zusatzwicklung L1 über eine erste Diode D1 mit einem ersten Anschluss 22 einer Gegenspannungsquelle 23 verbunden ist und ein zweiter Anschluss der Zusatzwicklung L1 direkt mit einem zweiten Anschluss 24 der Gegenspannungsquelle 23 verbunden ist.

Bei der Ausführungsform einer Schaltungsanordnung 1 gemäß Fig. 1 wird die von der Resonanzdrossel Lres in die Zusatzwicklung L1 eingekoppelte Energie bei entsprechender Polarität der Spannung über der Zusatzwicklung L1 über die erste Diode D1 in die Gegenspannungsquelle 23 entladen. Der Wicklungssinn der Resonanzdrossel Lres und der Zusatzwicklung L1 auf einem gemeinsamen Kern kann bei dieser Ausführungsform beliebig, d.h. sowohl gleichsinnig als auch gegensinnig gewählt werden.

Bei der in Fig. 2 dargestellten Ausführungsform einer nicht unter den Schutzumfang der Ansprüche fallenden Schaltungsanordnung 1 ist gegenüber der Ausführungsform in Fig. 1 der erste Anschluss der Zusatzwicklung L1 zusätzlich über eine zweite Diode D2 mit einem dritten Anschluss 25 der Gegenspannungsquelle 23 verbunden. Die Gegenspannungsquelle 23 ist dabei als eine geteilte Gegenspannungsquelle ausgebildet, wobei das elektrische Potential am zweiten Anschluss 24 der Gegenspannungsquelle 23 ein Zwischenpotential zwischen dem elektrischen Potential am ersten Anschluss 22 und dem elektrischen Potential am dritten Anschluss 25 der Gegenspannungsquelle 23 bildet.

Die von der Resonanzdrossel Lres in die Zusatzwicklung L1 eingekoppelte Energie wird bei dieser Ausführungsform je nach Polarität der Spannung über der Zusatzwicklung L1 über die erste Diode D1 in den Teil der Gegenspannungsquelle 23 zwischen dem ersten Anschluss 22 und dem zweiten Anschluss 24 oder über die zweite Diode D2 in den Teil der Gegenspannungsquelle 23 zwischen dem zweiten Anschluss 24 und dem dritten Anschluss 25 entladen. Der Wicklungssinn der Resonanzdrossel Lres und der Zusatzwicklung L1 auf einem gemeinsamen Kern kann bei dieser Ausführungsform beliebig, d.h. sowohl gleichsinnig als auch gegensinnig gewählt werden.

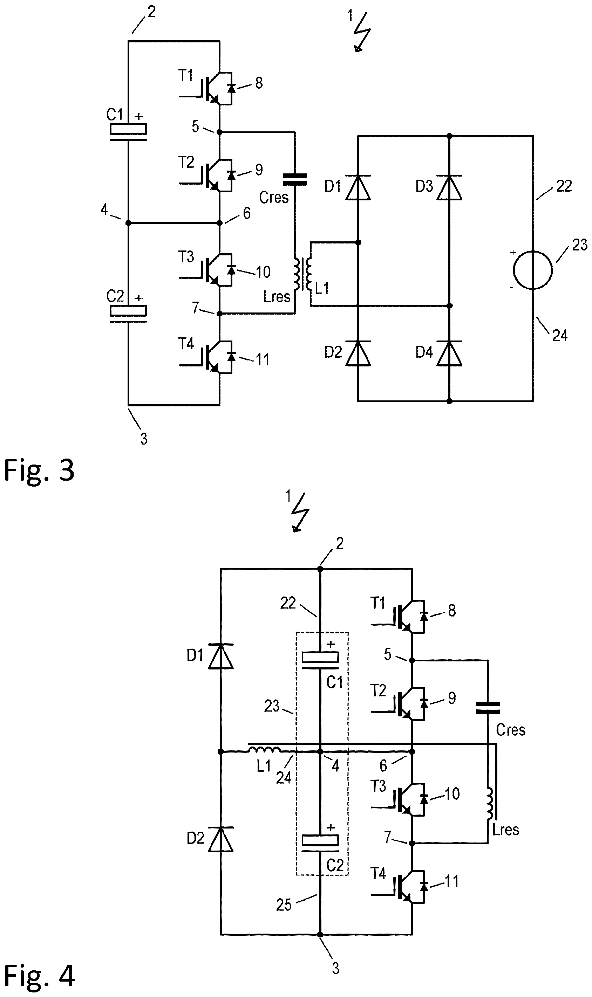

Bei der Ausführungsform einer nicht unter den Schutzumfang der Ansprüche fallenden Schaltungsanordnung 1 in Fig. 3 ist der zweite Anschluss der Zusatzwicklung L1 über eine dritte Diode D3 mit dem ersten Anschluss 22 der Gegenspannungsquelle 23 und über eine vierte Diode D4 mit dem zweiten Anschluss 24 der Gegenspannungsquelle 23 verbunden. Bei dieser Ausführungsform einer erfindungsgemäßen Schaltungsanordnung 1 wird die von der Resonanzdrossel Lres in die Zusatzwicklung L1 eingekoppelte Energie je nach Polarität der Spannung über der Zusatzwicklung L1 entweder über die erste Diode D1 und die vierte Diode D4 oder über die zweite Diode D2 und die dritte Diode D3 in die Gegenspannungsquelle 23 entladen. Der Wicklungssinn der Resonanzdrossel Lres und der Zusatzwicklung L1 auf einem gemeinsamen Kern kann auch bei dieser Ausführungsform beliebig, d.h. sowohl gleichsinnig als auch gegensinnig gewählt werden.

Fig. 4 zeigt eine erfindungsgemäße Schaltungsanordnung 1, bei der die Gegenspannungsquelle 23 durch den zwischen dem ersten Gleichspannungsanschluss 2 und dem zweiten Gleichspannungsanschluss 3 angeordneten geteilten Gleichspannungszwischenkreis gebildet wird. Demensprechend ist hier bei einer zu Fig. 2 analogen Anordnung der erste Anschluss der Zusatzwicklung L1 über eine erste Diode D1 an den ersten Gleichspannungsanschluss 2 und über eine zweite Diode D2 an den zweiten Gleichspannungsanschluss 3 angeschlossen und der zweite Anschluss der Zusatzwicklung L1 ist direkt an den Zwischenkreismittelpunkt 4 angeschlossen.

Bei der Ausführungsform einer erfindungsgemäßen Schaltungsanordnung 1 gemäß Fig. 4 wird die von der Resonanzdrossel Lres in die Zusatzwicklung L1 eingekoppelte Energie abwechselnd über die erste Diode D1 in den ersten Zwischenkreiskondensator C1 des Gleichspannungszwischenkreis und über die zweite Diode D2 in den zweiten Zwischenkreiskondensator C2 des Gleichspannungszwischenkreises entladen, d.h. abwechselnd in eine der Zwischenkreishälften. Der Wicklungssinn der Resonanzdrossel Lres und der Zusatzwicklung L1 auf einem gemeinsamen Kern kann analog zu der Ausführungsform in Fig. 2 beliebig, d.h. sowohl gleichsinnig als auch gegensinnig gewählt werden.

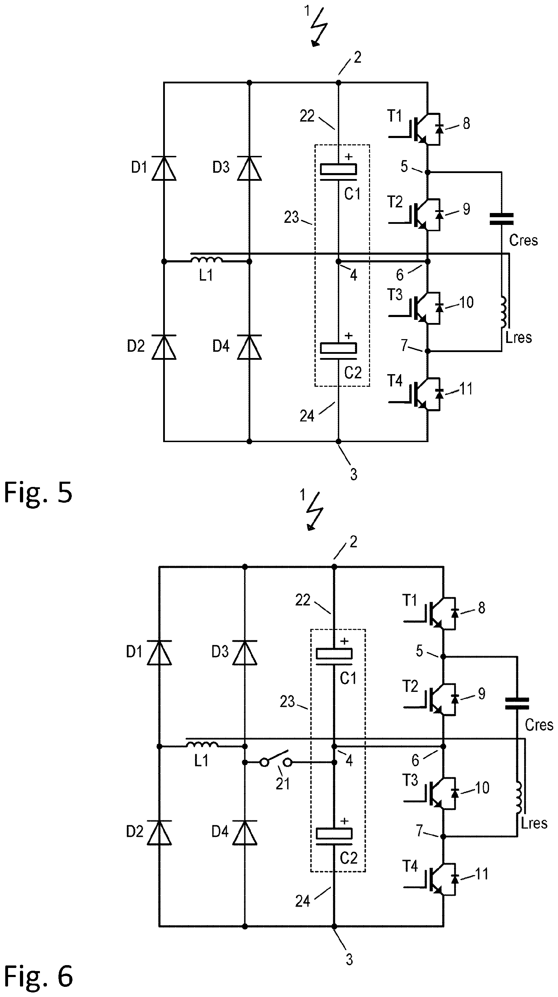

Die in Fig. 5 dargestellte Ausführungsform einer erfindungsgemäßen Schaltungsanordnung 1 unterscheidet sich von derjenigen in Fig. 4 dadurch, dass der zweite Anschluss der Zusatzwicklung L1 nicht an den Zwischenkreismittelpunkt 4 angeschlossen ist, sondern analog zu der Ausführungsform in Fig. 3 über eine dritte Diode D3 an den ersten Gleichspannungsanschluss 2 und über eine vierte Diode D4 an den zweiten Gleichspannungsanschluss 3. Bei dieser Ausführungsform einer erfindungsgemäßen Schaltungsanordnung 1 wird die von der Resonanzdrossel Lres in die Zusatzwicklung L1 eingekoppelte Energie entweder über die erste Diode D1 und die vierte Diode D4 oder über die zweite Diode D2 und die dritte Diode D3 in den aus der Reihenschaltung des ersten Zwischenkreiskondensators C1 und des zweiten Zwischenkreiskondensator C2 gebildeten Gleichspannungszwischenkreis entladen, d.h. unabhängig von der Polarität der Spannung über der Zusatzwicklung immer in beide Zwischenkreishälften. Der Wicklungssinn der Resonanzdrossel Lres und der Spule L1 auf einem gemeinsamen Kern kann analog zu der Ausführungsform in Fig. 3 beliebig, d.h. sowohl gleichsinnig als auch gegensinnig gewählt werden.

Bei der in Fig. 6 gezeigten Ausführungsform einer erfindungsgemäßen Schaltungsanordnung 1 ist gegenüber der Ausführungsform in Fig. 5 zwischen dem zweiten Anschluss der Zusatzwicklung L1 und dem Zwischenkreismittelpunkt 4 eine schaltbare Verbindung 21 angeordnet. Bei geschlossener schaltbarer Verbindung 21 ist dann der zweite Anschluss der Zusatzwicklung L1 an den Zwischenkreismittelpunkt 4 angeschlossen und bei geöffneter schaltbarer Verbindung 21 ist der zweite Anschluss der Zusatzwicklung L1 über die dritte Diode D3 an den ersten Gleichspannungsanschluss 2 und über die vierte Diode D4 an den zweiten Gleichspannungsanschluss 3 angeschlossen. Dadurch wird die von der Resonanzdrossel Lres in die Zusatzwicklung L1 eingekoppelte Energie bei geschlossener schaltbarer Verbindung 21 wie bei dem Ausführungsbeispiel in Fig. 5 abwechselnd in eine der Zwischenkreishälften entladen und bei geöffneter schaltbarer Verbindung 21 wie bei dem Ausführungsbeispiel in Fig. 6 immer in beide Zwischenkreishälften. Der Wicklungssinn der Resonanzdrossel Lres und der Zusatzwicklung L1 auf einem gemeinsamen Kern kann dementsprechend auch bei dieser Ausführungsform beliebig, d.h. sowohl gleichsinnig als auch gegensinnig gewählt werden.

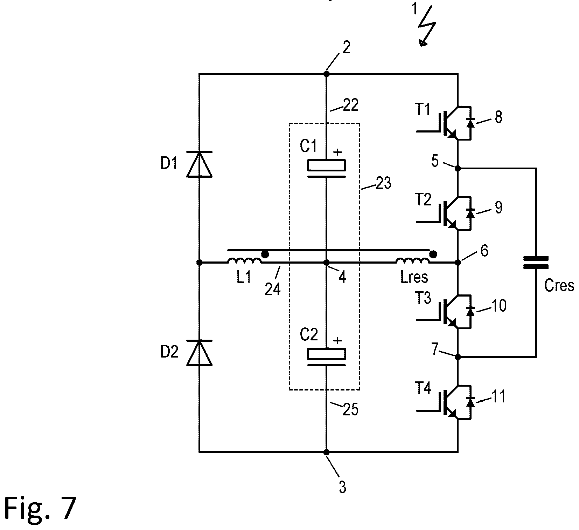

Die Fig. 7 zeigt eine Ausführungsform einer erfindungsgemäßen Schaltungsanordnung 1, bei der gegenüber der Ausführungsform in Fig. 4 die Resonanzdrossel Lres zwischen dem Zwischenkreismittelpunkt 4 und dem Brückenmittelpunkt 6 angeschlossen ist. Zwischen dem ersten Zwischenpunkt 5 und dem zweiten Zwischenpunkt 7 ist in dem Fall dann nur der Resonanzkondensator Cres angeschlossen.

Der Wicklungssinn der Resonanzdrossel Lres und der Zusatzwicklung L1 auf einem gemeinsamen Kern ist in dem in Fig. 7 dargestellten Fall als gleichsinnig gewählt. In Verbindung mit einem derart gewählten Wicklungssinn ergibt sich als Vorteil der Ausführungsform in Fig. 7 gegenüber den Ausführungsformen in Fig. 4 und Fig. 5, dass die von der Resonanzdrossel Lres in die Zusatzwicklung L1 eingekoppelte Energie immer in denjenigen der beiden Zwischenkreiskondensatoren C1 oder C2 entladen wird, in den auch die Energie aus dem aus der Resonanzdrossel Lres und dem Resonanzkondensator Cres gebildeten Resonanzkreis entladen wird, d.h. die Entladung der von der Resonanzdrossel Lres in die Zusatzwicklung L1 eingekoppelten Energie trägt in dem Fall zusätzlich zur Symmetrierung des Gleichspannungszwischenkreises bei.

Ein weiterer Vorteil der Ausführungsform gemäß Fig. 7 mit einem Wicklungssinn der Resonanzdrossel Lres und der Zusatzwicklung L1 wie dargestellt besteht darin, dass die Anordnung aus der mit der Resonanzdrossel Lres gekoppelten Zusatzwicklung L1 als ein Bauteil mit nur drei Anschlüssen ausgeführt werden kann.

Prinzipiell ist natürlich auch eine Ausführungsform wie in Fig. 7 mit einem abweichend hiervon als gegensinnig gewählten Wicklungssinn der Resonanzdrossel Lres und der Zusatzwicklung L1 auf einem gemeinsamen Kern möglich, wobei dann allerdings die zuvor genannten Vorteile nicht mehr gegeben sind.

Es ist weiterhin auch möglich, bei Anordnung der Resonanzdrossel Lres zwischen dem Zwischenkreismittelpunkt 4 und dem Brückenmittelpunkt 6 wie in Fig. 7 den zweiten Anschluss der Zusatzwicklung L1 wie in Fig. 5 über eine dritte Diode D3 an den ersten Gleichspannungsanschluss 2 und über eine vierte Diode D4 an den zweiten Gleichspannungsanschluss 3 anzuschließen. In dem Fall würde, ebenso wie bei der Ausführungsform gemäß Fig. 5, die in die Zusatzwicklung L1 eingekoppelte Energie immer in beide Zwischenkreishälften entladen und somit nicht mehr zusätzlich zur Symmetrierung des Gleichspannungszwischenkreises beitragen.

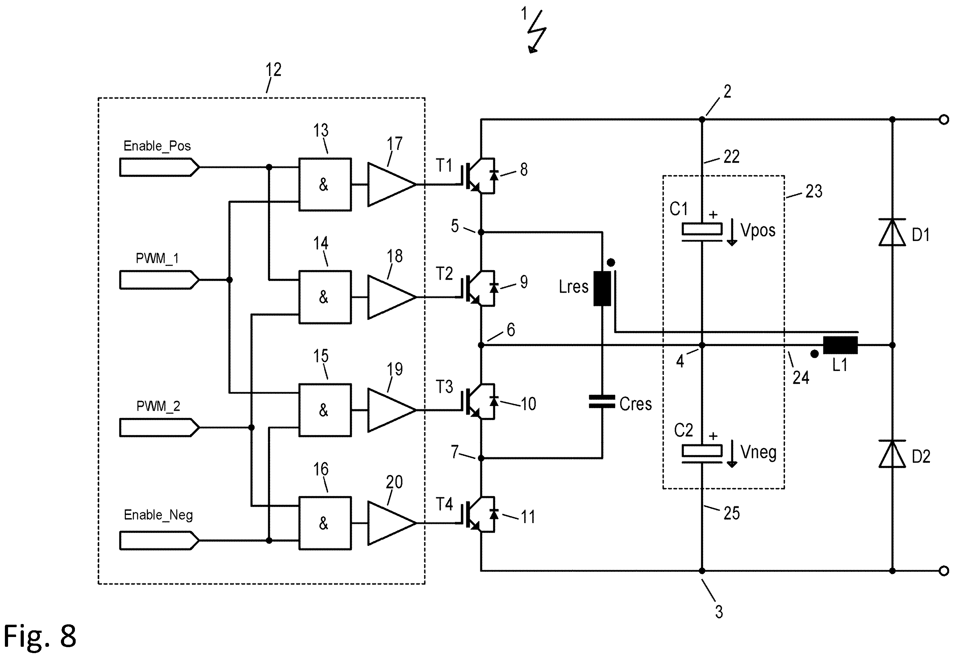

In Fig. 8 ist eine Ausführungsform einer erfindungsgemäßen Schaltungsanordnung 1 mit einer Ansteuerschaltung 12 zur Ansteuerung der Halbleiterschalter T1, T2, T3, T4 dargestellt.

Eine Signalleitung für ein erstes Freigabesignal En_Pos ist an einen ersten Eingang eines ersten UND-Gatters 13 und an einen ersten Eingang eines zweiten UND-Gatters 14 angeschlossen. Eine Signalleitung für ein zweites Freigabesignal En_Neg ist an einen ersten Eingang eines dritten UND-Gatters 15 und an einen ersten Eingang eines vierten UND-Gatters 16 angeschlossen. Weiterhin ist eine Signalleitung für ein erstes PWM-Signal PWM_1 jeweils an einen zweiten Eingang des ersten UND-Gatters 13 und des dritten UND-Gatters 16 angeschlossen und eine Signalleitung für ein zweites PWM-Signal PWM_2 jeweils an einen zweiten Eingang des zweiten UND-Gatters 14 und des vierten UND-Gatters 15 angeschlossen. Die Ausgänge der UND-Gatter 13, 14, 15, 16 sind jeweils über Treiber 17, 18, 19, 20 an Ansteuereingänge der Halbleiterschalter T1, T2, T3, T4 angeschlossen.

Die Ansteuerschaltung 12 in Fig. 8 ist dadurch dazu eingerichtet, das erste PWM-Signal PWM_1 über das erste Freigabesignal En_Pos zur Ansteuerung des ersten Transistors T1 freizugeben oder zu sperren, das zweite PWM-Signal PWM_2 über das erste Freigabesignal En_Pos zur Ansteuerung des zweiten Transistors T2 freizugeben oder zu sperren, das erste PWM-Signal PWM_1 über das zweite Freigabesignal En_Neg zur Ansteuerung des dritten Transistors T3 freizugeben oder zu sperren und das zweite PWM-Signal PWM_2 über das zweite Freigabesignal En_Neg zur Ansteuerung des vierten Transistors T4 freizugeben oder zu sperren.

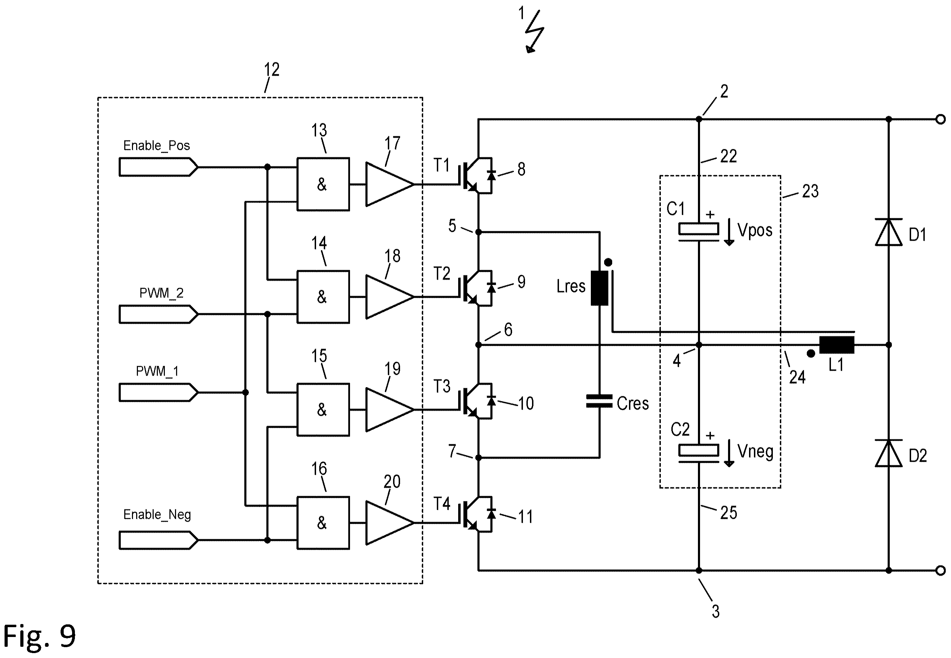

Die Ansteuerschaltung 12 der Ausführungsform einer erfindungsgemäßen Schaltungsanordnung 1 in Fig. 9 unterscheidet sich von derjenigen in Fig. 8 dadurch, dass eine Signalleitung für ein erstes PWM-Signal PWM_1 jeweils an einen zweiten Eingang des ersten UND-Gatters 13 und des vierten UND-Gatters 16 angeschlossen und eine Signalleitung für ein zweites PWM-Signal PWM_2 jeweils an einen zweiten Eingang des zweiten UND-Gatters 14 und des dritten UND-Gatters 15 angeschlossen ist.

Die Ansteuerschaltung 12 in Fig. 9 ist dadurch dazu eingerichtet, das erste PWM-Signal PWM_1 über das erste Freigabesignal En_Pos zur Ansteuerung des ersten Transistors T1 freizugeben oder zu sperren, das zweite PWM-Signal PWM_2 über das erste Freigabesignal En_Pos zur Ansteuerung des zweiten Transistors T2 freizugeben oder zu sperren, das zweite PWM-Signal PWM_2 über das zweite Freigabesignal En_Neg zur Ansteuerung des dritten Transistors T3 freizugeben oder zu sperren und das erste PWM-Signal PWM_1 über das zweite Freigabesignal En_Neg zur Ansteuerung des vierten Transistors T4 freizugeben oder zu sperren.

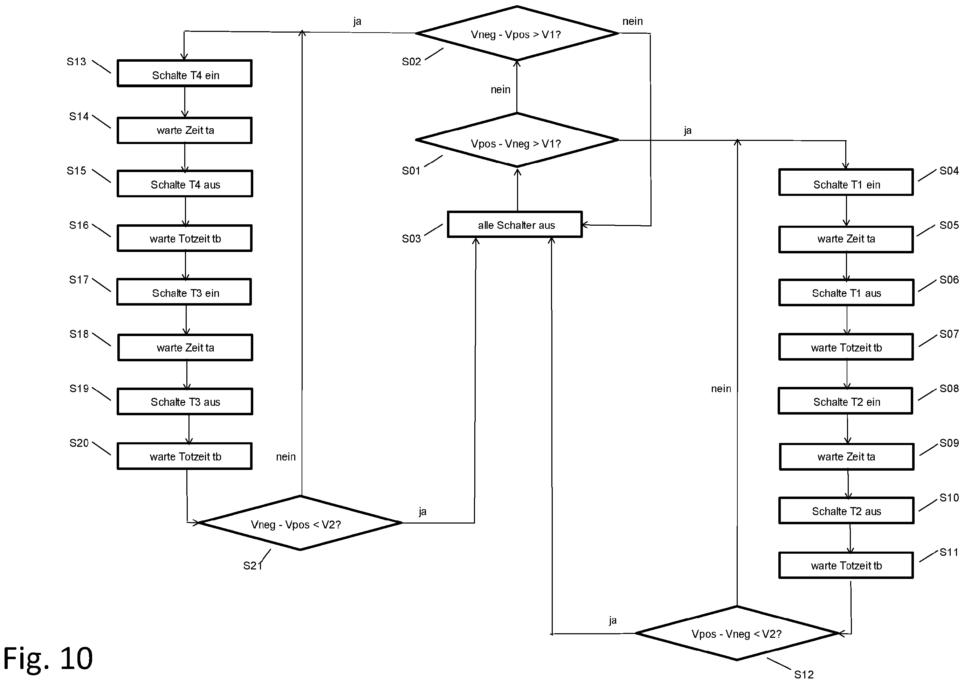

Anstatt durch eine Verschaltung von Logik-Gattern, wie bei der Ansteuerschaltung 12 in den Fig. 8 und 9, können geeignete Signale zur Ansteuerung der Halbleiterschalter T1, T2, T3, T4 auch durch einen Zustandsautomaten, beispielsweise unter Verwendung eines Mikrocontrollers, erzeugt werden. Ein entsprechendes Flussdiagram ist in Fig. 10 dargestellt.

Zunächst wird in einem ersten Schritt S01 überprüft, ob eine Differenz Vpos - Vneg zwischen der Spannung Vpos am ersten Zwischenkreiskondensator C1 und der Spannung Vneg am zweiten Zwischenkreiskondensator C2 einen ersten Schwellwert V1 überschreitet. Falls nicht, wird in einem zweiten Schritt S02 überprüft, ob eine Differenz Vneg - Vpos zwischen der Spannung Vneg am zweiten Zwischenkreiskondensator C2 und der Spannung Vpos am ersten Zwischenkreiskondensator C1 den ersten Schwellwert V1 überschreitet. Ist auch dies nicht der Fall, werden in einem dritten Schritt S03 alle Halbleiterschalter T1, T2, T3, T4 ausgeschaltet und die Schritte S01 und S02 wiederholt durchlaufen.

Falls bei der Überprüfung in Schritt S01 die Differenz Vpos - Vneg den ersten Schwellwert V1 überschreitet, wird in einem vierten Schritt S04 der erste Halbleiterschalter T1 eingeschaltet, in einem fünften Schritt S05 eine Zeitdauer ta abgewartet und dann in einem sechsten Schritt S06 der erste Halbleiterschalter T1 wieder ausgeschaltet. Die Zeitdauer ta entspricht dabei beispielweise der halben Periodendauer einer Resonanzschwingung des aus dem Resonanzkondensator Cres und der Resonanzdrossel Lres gebildeten Resonanzkreises.

Anschließend wird in einem siebten Schritt S07 eine Totzeit tb abgewartet, bevor in einem achten Schritt S08 der zweite Halbleiterschalter T2 eingeschaltet wird. Durch die Totzeit tb werden die nicht vernachlässigbaren Schaltzeiten der Halbleiterschalter T1, T2, T3, T4 berücksichtigt, um zu gewährleisten, dass der erste Halbleiterschalter T1 und der zweite Halbleiterschalter T2 nicht gleichzeitig eingeschaltet sein können und dann den ersten Zwischenkreiskondensator C1 kurzschließen. Die Totzeit tb ist beispielsweise so klein zu wählen, wie es die verwendeten Halbleiterschalter es zulassen.

In einem neunten Schritt S09 wird wiederum die Zeitdauer ta abgewartet, dann wird in einem zehnten Schritt S10 der zweite Halbleiterschalter T2 wieder ausgeschaltet und in einem elften Schritt S11 wiederum die Totzeit tb abgewartet, um zu gewährleisten, dass der erste Halbleiterschalter T1 und der zweite Halbleiterschalter T2 nicht gleichzeitig eingeschaltet sein können.

In einem zwölften Schritt S12 wird überprüft, ob die Differenz die Vpos - Vneg einen zweiten Schwellwert V2 unterschreitet. Falls nicht, werden wiederholt die Schritte S04 bis S12 ausgeführt. Ansonsten wird zu Schritt S03 verzweigt, in dem alle Halbleiterschalter T1, T2, T3, T4 ausgeschaltet werden und anschließend wieder die Schritte S01 und S02 wie zuvor beschrieben durchlaufen.

Der zweite Schwellwert V2 ist dabei kleiner als der erste Schwellwert V1 zu wählen, um eine Hysterese für die Aktivierung der Schaltungsanordnung 1 zu Symmetrierung zu bewirken.

Falls bei der Überprüfung in Schritt S02 die Differenz Vneg - Vpos den ersten Schwellwert V1 überschreitet, wird in einem dreizehnten Schritt S13 der vierte Halbleiterschalter T4 eingeschaltet, in einem vierzehnten Schritt S14 die Zeitdauer ta abgewartet und dann in einem fünfzehnten Schritt S15 der vierte Halbleiterschalter T4 wieder ausgeschaltet.

Anschließend wird in einem sechszehnten Schritt S16 die Totzeit tb abgewartet, bevor in einem siebzehnten Schritt S17 der dritte Halbleiterschalter T3 eingeschaltet wird. Durch die Totzeit tb werden in diesen Fall die nicht vernachlässigbaren Schaltzeiten der Halbleiterschalter T1, T2, T3, T4 berücksichtigt, um zu gewährleisten, dass der dritte Halbleiterschalter T3 und der vierte Halbleiterschalter T4 nicht gleichzeitig eingeschaltet sind, da sie sonst den zweiten Zwischenkreiskondensator C2 kurzschließen.

In einem achtzehnten Schritt S18 wird wiederum die Zeitdauer ta abgewartet, dann wird in einem neunzehnten Schritt S19 der dritte Halbleiterschalter T3 wieder ausgeschaltet und in einem zwanzigsten Schritt S20 wiederum die Totzeit tb abgewartet, um zu gewährleisten, dass der dritte Halbleiterschalter T3 und der vierte Halbleiterschalter T4 nicht gleichzeitig eingeschaltet sind.

In einem einundzwanzigsten Schritt S21 wird überprüft, ob Differenz die Vneg - Vpos einen zweiten Schwellwert V2 unterschreitet. Falls nicht, werden wiederholt die Schritte S13 bis S21 ausgeführt. Ansonsten wird zu Schritt S03 verzweigt, in dem alle Halbleiterschalter T1, T2, T3, T4 ausgeschaltet werden und anschließend wieder die Schritte S01 und S02 wie zuvor beschrieben durchlaufen.

In einer alternativen, nicht dargestellten Ausgestaltung eines Zustandsautomaten kann auch in den Schritten S01 und S12 in Fig. 10 der Betrag der Differenz Vpos - Vneg auf Überschreiten des ersten Schwellwerts V1 bzw. Unterschreiten des zweiten Schwellwert V2 überprüft werden. In einer solchen Ausgestaltung des Zustandsautomaten entfallen dann die Schritte S02, S21 sowie S13 bis S20 und es wird in den Schritten S04 bis S11 zeitgleich mit dem Halbleiterschalter T1 der Halbleiterschalter T3 ein- oder ausgeschaltet sowie zeitgleich mit dem Halbleiterschalter T2 der Halbleiterschalter T4 ein- oder ausgeschaltet. Die Erfindung ist nicht auf die explizit gezeigten Ausführungsformen beschränkt, sondern kann in vielfacher Art und Weise abgewandelt, insbesondere mit anderen gezeigten oder dem Fachmann bekannten Ausführungsformen kombiniert werden. Der Schutzumfang der Erfindung ist beschänkt durch die Ansprüche.

### Bezugszeichenliste

- 1: Schaltungsanordnung
- 2: Gleichspannungsanschluss
- 3: Gleichspannungsanschluss
- 4: Zwischenkreismittelpunkt
- 5: Zwischenpunkt
- 6: Brückenmittelpunkt
- 7: Zwischenpunkt
- 8: Antiparallele Diode
- 9: Antiparallele Diode
- 10: Antiparallele Diode
- 11: Antiparallele Diode
- 12: Ansteuerschaltung
- 13: UND-Gatter
- 14: UND-Gatter
- 15: UND-Gatter
- 16: UND-Gatter
- 17: Treiber
- 18: Treiber
- 19: Treiber
- 20: Treiber
- 21: schaltbare Verbindung
- 22: Anschluss
- 23: Gegenspannungsquelle
- 24: Anschluss
- 25: Anschluss

- T1 - T4: Halbleiterschalter

- D1 - D4: Diode

- C1: Zwischenkreiskondensator
- C2: Zwischenkreiskondensator

- Cres: Resonanzkondensator
- Lres: Resonanzdrossel
- L1: Zusatzwicklung
- S01 - S21: Schritt

- Vpos: Spannung
- Vneg: Spannung

- V1: Schwellwert
- V2: Schwellwert

- PWM_1: PWM-Signal
- PWM_2: PWM-Signal

- En_Pos: Freigabesignal
- En_Neg: Freigabesignal

## Patentansprüche

1. Schaltungsanordnung (1) zur Symmetrierung eines geteilten Gleichspannungszwischenkreises, welcher eine Reihenschaltung eines ersten Zwischenkreiskondensators (C1) und eines zweiten Zwischenkreiskondensators (C2) zwischen einem ersten Gleichspannungsanschluss (2) und einem zweiten Gleichspannungsanschluss (3) umfasst und einen Zwischenkreismittelpunkt (4) zwischen dem ersten Zwischenkreiskondensator (C1) und dem zweiten Zwischenkreiskondensator (C2) aufweist, wobei bei der Schaltungsanordnung (1) der erste Gleichspannungsanschluss (2) über einen ersten Halbleiterschalter (T1, T4) mit einem ersten Zwischenpunkt (5), der erste Zwischenpunkt (5) über einen zweiten Halbleiterschalter (T2, T3) mit einem Brückenmittelpunkt (6), der Brückenmittelpunkt (6) über einen dritten Halbleiterschalter (T2, T3) mit einem zweiten Zwischenpunkt (7) und der zweite Zwischenpunkt (7) über einen vierten Halbleiterschalter (T1, T4) mit dem zweiten Gleichspannungsanschluss (3) verbunden ist, wobei die Halbleiterschalter (T1, T2, T3, T4) jeweils eine antiparallele Diode (8, 9, 10, 11) aufweisen, und weiterhin ein erster Anschluss eines Resonanzkondensators (Cres) mit dem ersten Zwischenpunkt (5) verbunden ist und ein zweiter Anschluss des Resonanzkondensators (Cres) mit dem Zwischenkreismittelpunkt (4) über einen Verbindungspfad verbunden ist, in dem eine Resonanzdrossel (Lres) mit dem dritten Halbleiterschalter (T2, T3) in einer Reihenschaltung angeordnet ist und der über den zweiten Zwischenpunkt (7) verläuft, **dadurch gekennzeichnet, dass** eine Zusatzwicklung (L1) mit der Resonanzdrossel (Lres) magnetisch gekoppelt ist, wobei ein erster Anschluss der Zusatzwicklung (L1) über eine erste Diode (D1, D2) mit einem ersten Anschluss (22, 25) einer Gegenspannungsquelle (23) verbunden ist und ein zweiter Anschluss der Zusatzwicklung (L1) derart mit einem zweiten Anschluss (24) der Gegenspannungsquelle (23) verbunden ist, dass ein Entladungspfad für eine Entladung der von der Resonanzdrossel (Lres) in die Zusatzwicklung (L1) eingekoppelten Energie über die erste Diode (D1, D2) in die Gegenspannungsquelle (23) gebildet wird, wobei die Gegenspannungsquelle (23) durch den ersten Zwischenkreiskondensator (C1) und/oder den zweiten Zwischenkreiskondensator (C2) gebildet wird.

2. Schaltungsanordnung (1) nach Anspruch 1, wobei der zweite Anschluss der Zusatzwicklung (L1) direkt mit dem zweiten Anschluss (24) der Gegenspannungsquelle (23) verbunden ist, wobei vorzugsweise der erste Anschluss der Zusatzwicklung (L1) über eine zweite Diode (D1, D2) mit einem dritten Anschluss (22, 25) der Gegenspannungsquelle (23) verbunden ist.

3. Schaltungsanordnung (1) nach Anspruch 1, wobei der erste Anschluss der Zusatzwicklung (L1) über eine zweite Diode (D1, D2) mit dem zweiten Anschluss (24) der Gegenspannungsquelle (23) verbunden ist und der zweite Anschluss der Zusatzwicklung (L1) über eine dritte Diode (D3) mit dem ersten Anschluss (22) der Gegenspannungsquelle (23) und über eine vierte Diode (D4) mit dem zweiten Anschluss (24) der Gegenspannungsquelle (23) verbunden ist.

4. Schaltungsanordnung (1) nach einem der Ansprüche 1 bis 3, wobei die Resonanzdrossel (Lres) zwischen dem zweiten Anschluss des Resonanzkondensators (Cres) und dem zweiten Zwischenpunkt (7) angeordnet ist.

5. Schaltungsanordnung (1) nach einem der Ansprüche 1 bis 3, wobei die Resonanzdrossel (Lres) zwischen dem Zwischenkreismittelpunkt (4) und dem Brückenmittelpunkt (6) angeordnet ist.

6. Schaltungsanordnung (1) nach einem der vorhergehenden Ansprüche, wobei die Halbleiterschalter (T1, T2, T3, T4) derart angeordnet sind, dass sie für einen Stromfluss zwischen dem ersten Gleichspannungsanschluss (2) und dem zweiten Gleichspannungsanschluss (3) jeweils eine gleiche Durchflussrichtung und Sperrrichtung haben.

7. Schaltungsanordnung (1) nach einem der vorhergehenden Ansprüche, umfassend eine Ansteuerschaltung (12) zur Ansteuerung der Halbleiterschalter (T1, T2, T3, T4) mit einem PWM-Signal (PWM_1, PWM_2), wobei die Ansteuerschaltung (12) dazu eingerichtet ist, eine gleichzeitige Ansteuerung des ersten Halbleiterschalters (T1, T4) und des vierten Halbleiterschalters (T1, T4) mit ein und demselben PWM-Signal (PWM_1, PWM_2) und/oder eine gleichzeitige Ansteuerung des zweiten Halbleiterschalters (T2, T3) und des dritten Halbleiterschalters (T2, T3) mit ein und demselben PWM-Signal (PWM_1, PWM_2) auszuschließen.

8. Schaltungsanordnung (1) nach einem der Ansprüche 1 bis 7, umfassend eine Ansteuerschaltung (12) zur Ansteuerung der Halbleiterschalter (T1, T2, T3, T4), wobei die Ansteuerschaltung (12) dazu eingerichtet ist, den ersten Halbleiterschalter (T1, T4) gemeinsam mit dem dritten Halbleiterschalter (T2, T3) und komplementär hierzu den zweiten Halbleiterschalter (T2, T3) gemeinsam mit dem vierten Halbleiterschalter (T1, T4) mit einem PWM-Signal (PWM_1, PWM_2) anzusteuern.

9. Schaltungsanordnung (1) nach einem der Ansprüche 1 bis 7, umfassend eine Ansteuerschaltung (12) zur Ansteuerung der Halbleiterschalter (T1, T2, T3, T4), wobei die Ansteuerschaltung (12) dazu eingerichtet ist, jeweils entweder ausschließlich den ersten Halbleiterschalter (T1, T4) und komplementär hierzu den zweiten Halbleiterschalter (T2, T3) oder ausschließlich den dritten Halbleiterschalter (T2, T3) und komplementär hierzu den vierten Halbleiterschalter (T1, T4) mit einem PWM-Signal (PWM_1, PWM_2) anzusteuern.

10. Schaltungsanordnung (1) nach Anspruch 8, wobei die Ansteuerschaltung (12) dazu eingerichtet ist, den ersten Halbleiterschalter (T1, T4) und den dritten Halbleiterschalter (T2, T3) mit einem ersten PWM-Signal (PWM_1) anzusteuern und den zweiten Halbleiterschalter (T2, T3) und den vierten Halbleiterschalter (T1, T4) mit einem zweiten PWM-Signal (PWM_2) anzusteuern, das zu dem ersten PWM-Signal (PWM_1) komplementär ist.

11. Schaltungsanordnung (1) nach Anspruch 10, wobei die Ansteuerschaltung (12) dazu eingerichtet ist, die PWM-Signale (PWM_1, PWM_2) für den ersten Halbleiterschalter (T1, T4) und den zweiten Halbleiterschalter (T2, T3) über ein erstes Freigabesignal (En_Pos) und die PWM-Signale (PWM_1, PWM_2) für den dritten Halbleiterschalter (T2, T3) und den vierten Halbleiterschalter (T1, T4) über ein zweites Freigabesignal (En_Neg) freizuschalten.

12. Schaltungsanordnung (1) nach Anspruch 9, wobei die Ansteuerschaltung (12) dazu eingerichtet ist, den ersten Halbleiterschalter (T1, T4) und den vierten Halbleiterschalter (T1, T4) mit einem ersten PWM-Signal (PWM_1) anzusteuern und den zweiten Halbleiterschalter (T2, T3) und den dritten Halbleiterschalter (T2, T3) mit einem zweiten PWM-Signal (PWM_2) anzusteuern, das zu dem ersten PWM-Signal (PWM_1) komplementär ist, und wobei die Ansteuerschaltung (12) dazu eingerichtet ist, die PWM-Signale (PWM_1, PWM_2) für den ersten Halbleiterschalter (T1, T4) und den zweiten Halbleiterschalter (T2, T3) über ein erstes Freigabesignal (En_Pos) und die PWM-Signale (PWM_1, PWM_2) für den dritten Halbleiterschalter (T2, T3) und den vierten Halbleiterschalter (T1, T4) über ein zweites Freigabesignal (En_Neg) freizuschalten.

13. Schaltungsanordnung (1) nach Anspruch 11 oder 12, wobei die Ansteuerschaltung (12) dazu eingerichtet ist, das erste Freigabesignal (En_Pos) zu setzen, wenn die Differenz zwischen der Spannung am ersten Zwischenkreiskondensator (C1) und der Spannung am zweiten Zwischenkreiskondensator (C2) einen ersten Schwellwert (V1) überschreitet und wieder zurückzusetzen, wenn die Differenz zwischen der Spannung am ersten Zwischenkreiskondensator (C1) und der Spannung am zweiten Zwischenkreiskondensator (C2) einen zweiten Schwellwert (V2) unterschreitet, und ferner dazu eingerichtet ist, das zweite Freigabesignal (En_Neg) zu setzen, wenn die Differenz zwischen der Spannung am zweiten Zwischenkreiskondensator (C2) und der Spannung am ersten Zwischenkreiskondensator (C1) den ersten Schwellwert (V1) überschreitet und wieder zurückzusetzen, wenn die Differenz zwischen der Spannung am zweiten Zwischenkreiskondensator (C2) und der Spannung am ersten Zwischenkreiskondensator (C1) den zweiten Schwellwert (V2) unterschreitet.

14. Schaltungsanordnung (1) nach einem der Ansprüche 11 bis 13, wobei die Ansteuerschaltung (12) dazu eingerichtet ist, eine Freischaltung der PWM-Signale (PWM_1, PWM_2) durch die Freigabesignale (En_Pos, En_Neg) auf Flanken der PWM-Signale (PWM_1, PWM_2) zu synchronisieren.

15. Schaltungsanordnung (1) nach einem der Ansprüche 7 bis 14, wobei die Frequenz der PWM-Signale (PWM_1, PWM_2) unterhalb der Resonanzfrequenz eines aus der Reihenschaltung des Resonanzkondensators (Cres) und der Resonanzdrossel (Lres) gebildeten Schwingkreises liegt.

## Claims

1. A circuit arrangement (1) for balancing a split DC link, which comprises a series circuit comprising a first DC-link capacitor (C1) and a second DC-link capacitor (C2) between a first DC-voltage terminal (2) and a second DC-voltage terminal (3) and has a DC-link center point (4) between the first DC-link capacitor (C1) and the second DC-link capacitor (C2), wherein, in the case of the circuit arrangement (1), the first DC-voltage terminal (2) is connected via a first semiconductor switch (T1, T4) to a first intermediate point (5), the first intermediate point (5) is connected via a second semiconductor switch (T2, T3) to a bridge center point (6), the bridge center point (6) is connected via a third semiconductor switch (T2, T3) to a second intermediate point (7), and the second intermediate point (7) is connected via a fourth semiconductor switch (T1, T4) to the second DC-voltage terminal (3), wherein the semiconductor switches (T1, T2, T3, T4) each have a antiparallel diode (8, 9, 10, 11), and furthermore a first terminal of a resonant capacitor (Cres) is connected to the first intermediate point (5), and a second terminal of the resonant capacitor (Cres) is connected to the DC-link center point (4) via a connecting path, in which a resonant inductor (Lres) is arranged in a series circuit with the third semiconductor switch (T2, T3), and which runs via the second intermediate point (7), **characterized in that** an additional winding (L1) is magnetically coupled to the resonant inductor (Lres), wherein a first terminal of the additional winding (L1) is connected via a first diode (D1, D2 ) to a first terminal (22, 25) of a countervoltage source (23), and a second terminal of the additional winding (L1) is connected to a second terminal (24) of the countervoltage source (23) in such a way that a discharge path is formed for discharging an energy coupled into the additional winding (L1) from the resonant inductor (Lres) into the countervoltage source (23) via the first diode (D1, D2), wherein the countervoltage source (23) is formed by the first DC-link capacitor (C1) and/or the second DC-link capacitor (C2).

2. The circuit arrangement (1) as claimed in claim 1, wherein the second terminal of the additional winding (L1) is connected directly to the second terminal (24) of the countervoltage source (23), wherein preferably the first terminal of the additional winding (L1) is connected via a second diode (D1, D2) to a third terminal (22, 25) of the countervoltage source (23).

3. The circuit arrangement (1) as claimed in claim 1, wherein the first terminal of the additional winding (L1) is connected via a second diode (D1, D2) to the second terminal (24) of the countervoltage source (23), and the second terminal of the additional winding (L1) is connected via a third diode (D3) to the first terminal (22) of the countervoltage source (23) and via a fourth diode (D4) to the second terminal (24) of the countervoltage source (23).

4. The circuit arrangement (1) as claimed in one of claims 1 to 3, wherein the resonant inductor (Lres) is arranged between the second terminal of the resonant capacitor (Cres) and the second intermediate point (7).

5. The circuit arrangement (1) as claimed in one of claims 1 to 3, wherein the resonant inductor (Lres) is arranged between the DC-link center point (4) and the bridge center point (6).

6. The circuit arrangement (1) as claimed in one of the preceding claims, wherein the semiconductor switches (T1, T2, T3, T4) are arranged in such a way that they each have an identical forward direction and reverse direction for a current flow between the first DC-voltage terminal (2) and the second DC-voltage terminal (3).

7. The circuit arrangement (1) as claimed in one of the preceding claims, comprising a drive circuit (12) for driving the semiconductor switches (T1, T2, T3, T4) using a PWM signal (PWM_1, PWM_2), wherein the drive circuit (12) is configured to rule out simultaneous driving of the first semiconductor switch (T1, T4) and the fourth semiconductor switch (T1, T4) using one and the same PWM signal (PWM_1, PWM_2) and/or simultaneous driving of the second semiconductor switch (T2, T3) and the third semiconductor switch (T2, T3) using one and the same PWM signal (PWM_1, PWM_2).

8. The circuit arrangement (1) as claimed in one of claims 1 to 7, comprising a drive circuit (12) for driving the semiconductor switches (T1, T2, T3, T4), wherein the drive circuit (12) is configured to drive the first semiconductor switch (T1, T4) together with the third semiconductor switch (T2, T3) and, in complementary fashion thereto, the second semiconductor switch (T2, T3) together with the fourth semiconductor switch (T1, T4) using a PWM signal (PWM_1, PWM_2) .

9. The circuit arrangement (1) as claimed in one of claims 1 to 7, comprising a drive circuit (12) for driving the semiconductor switches (T1, T2, T3, T4), wherein the drive circuit (12) is configured to drive in each case either exclusively the first semiconductor switch (T1, T4) and, in complementary fashion thereto, the second semiconductor switch (T2, T3) or exclusively the third semiconductor switch (T2, T3) and, in complementary fashion thereto, the fourth semiconductor switch (T1, T4) using a PWM signal (PWM_1, PWM_2) .

10. The circuit arrangement (1) as claimed in claim 8, wherein the drive circuit (12) is configured to drive the first semiconductor switch (T1, T4) and the third semiconductor switch (T2, T3) using a first PWM signal (PWM_1) and to drive the second semiconductor switch (T2, T3) and the fourth semiconductor switch (T1, T4) using a second PWM signal (PWM_2), which is complementary to the first PWM signal (PWM_1).

11. The circuit arrangement (1) as claimed in claim 10, wherein the drive circuit (12) is configured to enable the PWM signals (PWM_1, PWM_2) for the first semiconductor switch (T1, T4) and the second semiconductor switch (T2, T3) via a first enable signal (En_Pos) and the PWM signals (PWM_1, PWM_2) for the third semiconductor switch (T2, T3) and the fourth semiconductor switch (T1, T4) via a second enable signal (En_Neg).

12. The circuit arrangement (1) as claimed in claim 9, wherein the drive circuit (12) is configured to drive the first semiconductor switch (T1, T4) and the fourth semiconductor switch (T1, T4) using a first PWM signal (PWM_1) and to drive the second semiconductor switch (T2, T3) and the third semiconductor switch (T2, T3) using a second PWM signal (PWM_2), which is complementary to the first PWM signal (PWM_1), and wherein the drive circuit (12) is configured to enable the PWM signals (PWM_1, PWM_2) for the first semiconductor switch (T1, T4) and the second semiconductor switch (T2, T3) via a first enable signal (En_Pos) and the PWM signals (PWM_1, PWM_2) for the third semiconductor switch (T2, T3) and the fourth semiconductor switch (T1, T4) via a second enable signal (En_Neg).

13. The circuit arrangement (1) as claimed in claim 11 or 12, wherein the drive circuit (12) is configured to set the first enable signal (En_Pos) when the difference between the voltage across the first DC-link capacitor (C1) and the voltage across the second DC-link capacitor (C2) exceeds a first threshold value (V1) and to reset it again when the difference between the voltage across the first DC-link capacitor (C1) and the voltage across the second DC-link capacitor (C2) falls below a second threshold value (V2), and is additionally configured to set the second enable signal (En_Neg) when the difference between the voltage across the second DC-link capacitor (C2) and the voltage across the first DC-link capacitor (C1) exceeds the first threshold value (V1) and to reset it again when the difference between the voltage across the second DC-link capacitor (C2) and the voltage across the first DC-link capacitor (C1) falls below the second threshold value (V2).

14. The circuit arrangement (1) as claimed in one of claims 11 to 13, wherein the drive circuit (12) is configured to synchronize enabling of the PWM signals (PWM_1, PWM_2) by the enable signals (En_Pos, En_Neg) with edges of the PWM signals (PWM_1, PWM_2).

15. The circuit arrangement (1) as claimed in one of claims 7 to 14, wherein the frequency of the PWM signals (PWM_1, PWM_2) is below the resonant frequency of a resonant circuit formed from the series circuit comprising the resonant capacitor (Cres) and the resonant inductor (Lres)

## Revendications

1. Circuit (1) pour équilibrer un circuit intermédiaire de tension continue divisé, qui comprend un montage en série d'un premier condensateur de circuit intermédiaire (C1) et d'un deuxième condensateur de circuit intermédiaire (C2) entre une première borne de tension continue (2) et une deuxième borne de tension continue (3) et présente un point médian de circuit intermédiaire (4) entre le premier condensateur de circuit intermédiaire (C1) et le deuxième condensateur de circuit intermédiaire (C2), dans lequel, dans le circuit (1), la première borne de tension continue (2) est relié par un premier commutateur à semi-conducteur (T1, T4) à un premier point intermédiaire (5), le premier point intermédiaire (5) est relié par un deuxième commutateur à semi-conducteur (T2, T3) à un point central de pont (6), le point central du pont (6) est relié à un deuxième point intermédiaire (7) par un troisième commutateur à semi-conducteur (T2, T3) et le deuxième point intermédiaire (7) est relié au deuxième borne de tension continue (3) par un quatrième commutateur à semi-conducteur (T1, T4), les commutateurs à semi-conducteurs (T1, T2, T3, T4) comportant chacun une diode antiparallèle (8, 9, 10, 11), et en outre, une première borne d'un condensateur de résonance (Cres) est reliée au premier point intermédiaire (5) et une deuxième borne du condensateur de résonance (Cres) est reliée au point central du circuit intermédiaire (4) par un chemin de connexion, dans lequel un inductance de résonance (Lres) est disposée en série avec le troisième commutateur à semi-conducteur (T2, T3) et passe par le deuxième point intermédiaire (7), **caractérisé en ce qu'**un enroulement supplémentaire (L1) est couplé magnétiquement au inductance de résonance (Lres), une première borne de l'enroulement supplémentaire (L1) étant reliée à une première borne (22, 25) d'une source de contre-tension (23) par l'intermédiaire d'une première diode (D1, D2) et une deuxième borne de l'enroulement supplémentaire (L1) étant reliée à une deuxième borne (24) de la source de contre-tension (23) de telle sorte de manière à former un chemin de décharge pour une décharge de l'énergie injectée par l' inductance de résonance (Lres) dans l'enroulement supplémentaire (L1) via la première diode (D1, D2) dans la source de contre-tension (23), la source de contre-tension (23) étant formée par le premier condensateur de circuit intermédiaire (C1) et/ou le deuxième condensateur de circuit intermédiaire (C2).

2. Circuit (1) selon la revendication 1, dans lequel la deuxième borne de l'enroulement supplémentaire (L1) est directement reliée à la deuxième borne (24) de la source de contre-tension (23), le premier raccordement de l'enroulement supplémentaire (L1) étant de préférence relié à un troisième raccordement (22, 25) de la source de contre-tension (23) par l'intermédiaire d'une deuxième diode (D1, D2).

3. Circuit (1) selon la revendication 1, dans lequel la première borne de l'enroulement supplémentaire (L1) est reliée à la deuxième borne (24) de la source de contre-tension (23) par l'intermédiaire d'une deuxième diode (D1, D2) et la deuxième borne de l'enroulement supplémentaire (L1) est reliée à la première borne (22) de la source de contre-tension (23) par l'intermédiaire d'une troisième diode (D3) et à la deuxième borne (24) de la source de contre-tension (23) par l'intermédiaire d'une quatrième diode (D4) avec la deuxième borne (24) de la source de contre-tension (23).

4. Circuit (1) selon l'une des revendications 1 à 3, dans lequel l'inductance de résonance (Lres) est disposée entre la deuxième borne du condensateur de résonance (Cres) et le deuxième point intermédiaire (7).

5. Circuit (1) selon l'une des revendications 1 à 3, dans lequel l'inductance de résonance (Lres) est disposée entre le point central du circuit intermédiaire (4) et le point central du pont (6).

6. Circuit (1) selon l'une des revendications précédentes, dans lequel les commutateurs à semi-conducteurs (T1, T2, T3, T4) sont disposés de telle sorte qu'ils ont respectivement un sens de passage et un sens de blocage identiques pour un flux de courant entre la première borne de tension continue (2) et la deuxième borne de tension continue (3).

7. Circuit (1) selon l'une des revendications précédentes, comprenant un circuit de commande (12) pour commander les commutateurs à semi-conducteurs (T1, T2, T3, T4) avec un signal PWM (PWM_1, PWM_2), le circuit de commande (12) étant conçu pour exclure une commande simultanée du premier commutateur à semi-conducteur (T1, T4) et du quatrième commutateur à semi-conducteur (T1, T4) avec un seul et même signal PWM (PWM_1, PWM_2) et/ou une commande simultanée du deuxième commutateur à semi-conducteur (T2, T3) et du troisième commutateur à semi-conducteur (T2, T3 ) avec un seul et même signal PWM (PWM_1, PWM_2).

8. Circuit (1) selon l'une des revendications 1 à 7, comprenant un circuit de commande (12) pour commander les commutateurs à semi-conducteurs (T1, T2, T3, T4), le circuit de commande (12) étant conçu pour commander le premier commutateur à semi-conducteur (T1, T4) conjointement avec le troisième commutateur à semi-conducteur (T2, T3) et, de manière complémentaire, le deuxième commutateur à semi-conducteur (T2, T3) conjointement avec le quatrième commutateur à semi-conducteur (T1, T4) avec un signal PWM (PWM_1, PWM_2).

9. Circuit (1) selon l'une des revendications 1 à 7, comprenant un circuit de commande (12) pour commander les commutateurs à semi-conducteurs (T1, T2, T3, T4), le circuit de commande (12) étant conçu pour soit de commander exclusivement le premier commutateur à semi-conducteur (T1, T4) et, de manière complémentaire, le deuxième commutateur à semi-conducteur (T2, T3), soit de commander exclusivement le troisième commutateur à semi-conducteur (T2, T3) et, de manière complémentaire, le quatrième commutateur à semi-conducteur (T1, T4) avec un signal PWM (PWM_1, PWM_2).

10. Circuit (1) selon la revendication 8, dans lequel le circuit de commande (12) est conçu pour commander le premier commutateur à semi-conducteur (T1, T4) et le troisième commutateur à semi-conducteur (T2, T3) avec un premier signal PWM (PWM_1) et commander le deuxième commutateur à semi-conducteur (T2, T3) et le quatrième commutateur à semi-conducteur (T1, T4) avec un deuxième signal PWM (PWM_2), qui est complémentaire du premier signal PWM (PWM_1).

11. Circuit (1) selon la revendication 10, dans lequel le circuit de commande (12) est conçu pour activer les signaux PWM (PWM_1, PWM_2) pour le premier commutateur à semi-conducteur (T1, T4) et le deuxième commutateur à semi-conducteur (T2, T3) via un premier signal de validation (En_Pos) et les signaux PWM (PWM_1, PWM_2) pour le troisième commutateur à semi-conducteur (T2, T3) et le quatrième commutateur à semi-conducteur (T1, T4) par un deuxième signal de validation (En_Neg).

12. Circuit (1) selon la revendication 9, dans lequel le circuit de commande (12) est conçu pour commander le premier commutateur à semi-conducteur (T1, T4) et le quatrième commutateur à semi-conducteur (T1, T4) avec un premier signal PWM (PWM_1) et commander le deuxième commutateur à semi-conducteur (T2, T3) et le troisième commutateur à semi-conducteur (T2, T3) avec un deuxième signal PWM (PWM_2), qui est complémentaire du premier signal PWM (PWM_1), et le circuit de commande (12) étant conçu pour activer les signaux PWM (PWM_1, PWM_2) pour le premier commutateur à semi-conducteur (T1, T4) et le deuxième commutateur à semi-conducteur (T2, T3) via un premier signal de validation (En_Pos) et les signaux PWM (PWM_1, PWM_2) pour le troisième commutateur à semi-conducteur (T2, T3) et le quatrième commutateur à semi-conducteur (T1, T4) par un deuxième signal de validation (En_Neg).

13. Circuit (1) selon la revendication 11 ou 12, dans lequel le circuit de commande (12) étant conçu pour activer le premier signal de validation (En_Pos) lorsque la différence entre la tension sur le premier condensateur du circuit intermédiaire (C1) et la tension sur le deuxième condensateur du circuit intermédiaire (C2) dépasse une première valeur seuil (V1) et de le réinitialiser lorsque la différence entre la tension sur le premier condensateur du circuit intermédiaire (C1) et la tension sur le deuxième condensateur du circuit intermédiaire (C2) passe en dessous d'une deuxième valeur seuil (V2), et est en outre conçu pour activer le deuxième signal de validation (En_Neg) lorsque la différence entre la tension sur le deuxième condensateur du circuit intermédiaire (C2) et la tension sur le premier condensateur du circuit intermédiaire (C1) dépasse la première valeur seuil (V1) et pour le réinitialiser lorsque la différence entre la tension sur le deuxième condensateur du circuit intermédiaire (C2) et la tension sur le premier condensateur du circuit intermédiaire (C1) passe en dessous de la deuxième valeur seuil (V2).

14. Circuit (1) selon l'une des revendications 11 à 13, dans lequel le circuit de commande (12) est conçu pour synchroniser une activation des signaux PWM (PWM_1, PWM_2) par les signaux de validation (En_Pos, En_Neg) sur les fronts des signaux PWM (PWM_1, PWM_2).

15. Circuit (1) selon l'une des revendications 7 à 14, dans lequel la fréquence des signaux PWM (PWM_1, PWM_2) est inférieure à la fréquence de résonance d'un circuit oscillant formé par le montage en série du condensateur de résonance (Cres) et de l'inductance de résonance (Lres).
